# DEMANDE DE BREVET EUROPEEN

(11) **EP 2 389 995 A1**
(43) Date de publication de la demande: **30.11.2011**
(21) Numéro de dépôt: 11290233.3
(22) Date de dépôt: 19.05.2011
(51) Int. Cl.: B01D 53/14

(54) **Procédé d'enrichissement en gaz acides d'un effluent gazeux**

(30) Priorité: 27.05.2010 FR 1002221
(71) Demandeur: IFP Energies nouvelles, 92852 Rueil-Malmaison Cedex (FR)
(72) Inventeur: Scondo, Alexandre, 92500 Rueil-Malmaison (FR); Sinquin, Anne, 95870 Bezons (FR)

(57) **Abrégé**

La présente invention concerne un procédé d'enrichissement en composés acides d'un effluent gazeux qui comporte les étapes suivantes:
- on introduit dans un contacteur un gaz de charge comprenant des composés acides et une composition comprenant au moins deux phases liquides non miscibles entre elles, dont une phase aqueuse, au moins un composé amphiphile et au moins un mélange de promoteurs,
- on établit dans ledit contacteur des conditions de pression et de température déterminées pour la formation d'hydrates composés d'eau, de promoteurs et des composés acides,
- on transporte les hydrates en dispersion dans la phase non miscible dans la phase aqueuse par pompage vers un ballon de dissociation des hydrates,
- on établit dans le ballon les conditions de dissociation des hydrates,
- on évacue le gaz issu de la dissociation enrichi en composés acides par rapport au gaz de charge.

## Description

La présente invention concerne le domaine de la séparation de composés acides tels que l'hydrogène sulfuré (H2S) ou le dioxyde de carbone (CO2) contenus dans un flux de gaz, par exemple du gaz naturel, du gaz de synthèse, des fumées, ou tout autre effluent industriel. La présente invention propose d'utiliser une composition comprenant un mélange de deux phases liquides non miscibles entre elles, dont une phase aqueuse, et un mélange de promoteurs dans un procédé de séparation de composés acides contenus dans un effluent gazeux pour augmenter l'efficacité de ce procédé. L'invention peut s'appliquer au captage du CO2 contenu dans des fumées de combustion.

Les hydrates de gaz sont des cristaux solides qui se forment lorsque des molécules de gaz se trouvent en présence d'eau dans certaines conditions de pression et de température. Les molécules d'eau forment des cages dodécaédriques qui piègent des molécules de gaz tels que le CO2, l'H2S, le méthane, l'éthane, permettant de stocker de grandes quantités de gaz. En général, les hydrates de gaz se forment naturellement à basse température et à haute pression, de l'ordre de 16 bars à 0°C pour un gaz contenant 100% de CO2 et 72 bars à 0°C pour un gaz contenant 16 % de CO2.

On connaît par le document WO2008142262 un procédé d'enrichissement en gaz acides d'un effluent gazeux dans lequel ledit effluent gazeux est mis en contact avec un mélange d'au moins deux phases liquides non miscibles entre elles, dont une phase aqueuse pour former des hydrates. Les hydrates sont ensuite transportés dans la phase non miscible à l'eau vers un ballon de dissociation dans lequel ils sont dissociés. Le gaz issu de l'étape de dissociation est enrichi en composés acides par rapport au gaz de charge. Ce procédé est peu adapté à une utilisation industrielle car sa consommation énergétique est élevée. En effet, il est nécessaire de comprimer l'effluent gazeux à une pression d'au moins 50 bars pour pouvoir former des hydrates de gaz. Une telle consommation énergétique représente un coût opératoire considérable pour le captage des gaz acides. Pour une application industrielle, les quantités de gaz à traiter sont extrêmement élevées et toute amélioration des conditions de formation des hydrates de gaz (vitesse, pression, températures etc.) permettra de réduire la taille des installations et les coûts du procédé.

Ainsi, il subsiste un besoin d'un procédé d'enrichissement en composés acides d'une charge gazeuse à partir de formation d'hydrates, qui soit simple, efficace et permette de traiter de grandes quantités de charges gazeuses sans augmenter de manière trop importante les coûts de production.

Le demandeur a trouvé de façon surprenante qu'une composition comprenant au moins un mélange de deux phases liquides non miscible entre elles et dont l'une au moins est constituée d'eau, au moins un composé amphiphile et au moins un mélange de promoteurs permet d'augmenter l'efficacité de formation des hydrates.

Plus particulièrement, l'invention a pour but de proposer un procédé d'enrichissement en gaz acides d'un effluent gazeux qui présente un meilleur rendement et permet de diminuer le coût économique du procédé. Les dimensions de l'installation mettant en oeuvre le procédé selon l'invention sont réduites.

L'invention a pour objet un procédé d'enrichissement en composés acides d'un effluent gazeux comprenant les étapes suivantes:
• on introduit dans un contacteur un gaz de charge comprenant des composés acides et une composition comprenant :
   - au moins un mélange de deux phases liquides non miscibles entre elles, dont une phase aqueuse,
   - au moins un composé amphiphile,
   - au moins un mélange de promoteurs comprenant du tétrahydrofurane et au moins un promoteur de formule (I) 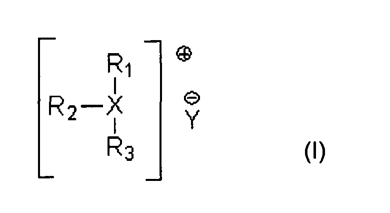
      ○ avec X= S, N-R₄ ou P-R₄,
      ○ Y est un anion choisi parmi le groupe constitué par un hydroxyle, un sulfate ou un halogène,
      ○ R₁, R₂, R₃, R₄ sont identiques ou différents et choisis parmi le groupe constitué des radicaux alkyles en C1-C5 linéaires ou ramifiés,
• on établit dans ledit contacteur des conditions de pression et de température déterminées pour la formation d'hydrates composés d'eau, de promoteurs et desdits composés acides,
• on transporte lesdits hydrates en dispersion dans la phase non miscible dans la phase aqueuse de ladite composition par pompage vers un ballon de dissociation des hydrates,
• on établit dans ledit ballon les conditions de dissociation des hydrates,
• on évacue le gaz issu de la dissociation, ledit gaz étant enrichi en composés acides par rapport au gaz de charge.

Un autre objet particulièrement important de l'invention est une composition comprenant :
- au moins un mélange de deux phases liquides non miscibles entre elles, dont une phase aqueuse,
- au moins un composé amphiphile,
- au moins un mélange de promoteurs comprenant du tétrahydrofurane et au moins un promoteur de formule (I) 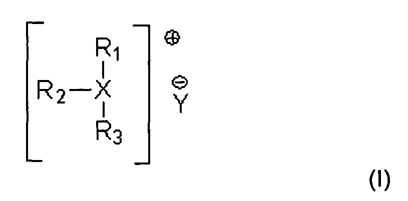
   - avec X= S, N-R₄ ou P-R₄,
   - Y est un anion choisi parmi le groupe constitué par un hydroxyle, un sulfate ou un halogène,
   - R₁, R₂, R₃, R₄ sont identiques ou différents et choisis parmi le groupe constitué des radicaux alkyles en C1-C5 linéaires ou ramifiés.

Un autre objet de l'invention est l'utilisation de cette composition pour la formation et/ou le transport d'hydrates de gaz.

L'invention sera mieux comprise et ses avantages apparaîtront plus clairement à la lecture de la description suivante, nullement limitative, illustrée par les figures ci-après annexées, parmi lesquelles :
- la figure 1 représente schématiquement le procédé selon l'invention,
- la figure 2 représente le dispositif pour l'étude de la cinétique de la réaction de formation des hydrates,
- la figure 3 illustre les variations de température (courbe pointillé) et de pression (courbe en trait plein) du gaz en contact avec une composition à tester lors de l'étude de la cinétique de la réaction de formation des hydrates,
- la figure 4 représente les constantes de temps (en heures, ordonnées) de la réaction de formation des hydrates en fonction de la pression initiale (en bars, abscisses) pour différentes compositions testées.

La présente invention présente notamment les avantages de :
- permettre le captage de composés acides tels que le CO2 et/ou l'H2S par formation d'hydrates de gaz à une pression plus faible que celle nécessaire à la formation des hydrates dans un procédé mettant en oeuvre une composition sans promoteur ou avec un seul promoteur.
- permettre le captage de composés acides tels que le CO2 et/ou l'H2S par formation d'hydrates de gaz à une vitesse supérieure à celle observée dans un procédé mettant en oeuvre une composition sans promoteur ou avec un seul promoteur.
- capter préférentiellement les composés acides tels que le CO2 et/ou H2S.

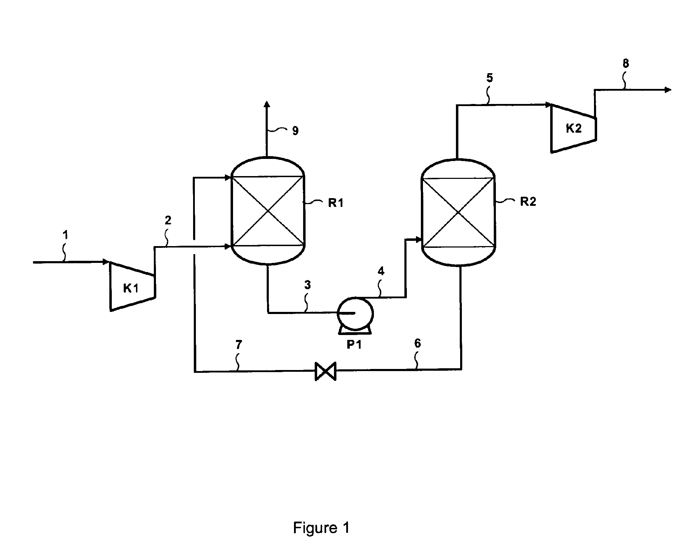

Le procédé d'enrichissement en gaz acides d'un effluent gazeux selon la présente invention comporte trois étapes principales illustrées à l'aide de la figure 1 :
(1) une première étape de traitement visant à mettre en contact le gaz de charge contenant des composés acides avec une composition comprenant au moins un mélange de deux phases liquides non miscibles entre elles dont l'une au moins est constituée d'eau, au moins un composé amphiphile et au moins un mélange de promoteurs selon l'invention. Le gaz de charge et la composition sont mis en contact dans des conditions de pression et de température compatibles avec la formation d'une phase hydrate constituée de composés acides, d'eau et de promoteurs. A titre d'exemple non limitatif, la pression et la température de formation des hydrates sont comprises respectivement entre 3 et 30 bars et entre 0 et 30 °C. De manière surprenante, le demandeur a constaté que l'association d'au moins deux promoteurs spécifiques dans un mélange de deux phases liquides non miscibles entre elles dont l'une au moins est constituée d'eau permet la formation d'hydrates de gaz à une pression plus faible que sans promoteur et à une vitesse de captage de gaz plus élevée que lorsqu'on utilise une composition sans promoteur ou en présence d'un seul promoteur.

Cette première étape permet la séquestration d'une forte proportion de gaz acides dans la phase hydrate, la vitesse de captage des gaz lors de la formation d'hydrates étant augmentée par rapport aux procédés de l'art antérieur. Cette vitesse est un critère important, car elle définit le temps de contact entre les gaz et la composition liquide. Plus cette vitesse est élevée, plus le rendement du procédé est augmenté ou plus la taille de l'installation mettant en oeuvre le procédé est réduite. Les particules d'hydrate de gaz ainsi enrichies en composés acides sont dispersées dans le liquide non miscible à l'eau et transportées sous forme d'une suspension de solides. Le gaz non transformé en hydrate est ainsi appauvri en composés acides. S'il ne correspond toujours pas aux spécifications demandées, il peut subir une seconde étape d'appauvrissement par les hydrates, ou être éventuellement traité par un autre procédé de désacidification de gaz. Sur la figure 1, la formation d'hydrates se fait dans le contacteur R1 dans lequel pénètre le gaz de charge par le conduit 2, après compression du gaz d'entrée par le conduit 1 à l'aide du compresseur K1. Le conduit 7 alimente le contacteur R1 avec la composition comprenant au moins un mélange de deux phases liquides non miscibles entre elles dont l'une au moins est constituée d'eau, au moins un composé amphiphile et au moins un mélange de promoteurs. Le gaz appauvri en composés acides est évacué par la conduite 9, alors que le coulis d'hydrates sort du bas du contacteur par le conduit 3.
(2) une seconde étape de traitement vise à augmenter la pression partielle en gaz acides de l'effluent issu de l'étape précédente. Elle consiste à pomper (P1) la suspension de solides, comportant notamment la phase hydrate à une pression 2 à 200 fois supérieure, de préférence à une pression 2 à 100 fois supérieure, à la pression du gaz de charge et à l'envoyer sous pression via le conduit 4 dans le ballon de dissociation R2. Dans ce ballon, la suspension est chauffée de manière à dissocier les particules d'hydrates enrichies en gaz acides en un mélange des deux liquides non miscibles initiaux contenant au moins un composé amphiphile et un mélange de promoteurs et en une phase gaz enrichie en composés acides à haute pression. Le flux gazeux ainsi obtenu présente une teneur et une pression partielle en gaz acides de deux à cent fois supérieure à celle du gaz de charge. Le gaz enrichi en composés acides est évacué par le conduit 5, et éventuellement comprimé par le compresseur K2 pour être injecté, par exemple dans un réservoir souterrain par le conduit 8.
(3) le mélange de liquides résultants de l'étape (2), et comportant majoritairement les deux liquides non miscibles, le (les) composé(s) amphiphile(s) et le mélange de promoteurs est détendu/refroidi pour être retourné par les conduits 6 et 7 dans le contacteur R1 de l'étape 1.

Le procédé de formation/dissociation des hydrates visant à appauvrir un gaz de charge, par exemple en CO₂, puis à enrichir en CO₂ un effluent issu du procédé, est réalisé dans une composition comprenant un mélange d'eau - composant des hydrates - et d'un solvant non miscible à l'eau. A ce mélange, on ajoute au moins un mélange de deux promoteurs et au moins un composé amphiphile qui présente la propriété de stabiliser le mélange eau/solvant non miscible à l'eau sous forme éventuellement d'une émulsion.

Le solvant utilisé pour le procédé peut être choisi parmi plusieurs familles : les solvants hydrocarbonés, les solvants de type silicone, les solvants halogénés ou perhalogénés.

Dans le cas des solvants hydrocarbonés, le solvant peut être choisi parmi le groupe constitué par :
- des coupes aliphatiques, par exemple des coupes isoparaffiniques ayant un point éclair suffisamment élevé pour être compatibles avec le procédé selon l'invention,
- des solvants organiques de type coupes aromatiques ou coupes naphténiques peuvent également être utilisées avec les mêmes conditions de point éclair,
- des produits purs ou en mélanges choisis parmi les alcanes ramifiés, les cycloalcanes et alkylcycloalcanes, les composés aromatiques, alkylaromatiques.

Le solvant hydrocarboné pour la mise en oeuvre du procédé selon l'invention est caractérisé en ce que son point éclair est supérieur à 40°C, et de préférence supérieur à 75°C et plus précisément supérieur à 100°C. Son point de cristallisation est inférieur à -5°C.

Les solvants de type silicone, seuls ou en mélanges, sont choisis par exemple parmi le groupe constitué par :
- les polydiméthylsiloxane (PDMS) linéaires du type (CH₃)₃-SiO-[(CH₃)₂-SiO]ₙ-Si(CH₃)₃ avec n compris entre 1 et 900, correspondant à des viscosités à température ambiante comprises entre 0,1 et 10000 mPa.s,
- les polydiéthylsiloxanes ayant une viscosité à température ambiante comprise entre 0,1 et 10000 mPa.s,
- les polydiméthylsiloxanes cycliques D₄ à D₁₀ et préférentiellement de D₅ à D₈. Le motif D représente l'unité monomère diméthylsiloxane,
- les poly(trifluoropropyl méthyl siloxane).

Les solvants halogénés ou perhalogénés pour le procédé sont choisis parmi les perfluorocarbures (PFC), les hydrofluoroéthers (HFE), les perfluoropolyéthers (PFPE). Le solvant halogéné ou perhalogéné utilisé pour la mise en oeuvre du procédé selon l'invention est caractérisé en ce que son point d'ébullition est supérieur ou égal à 70°C à pression atmosphérique et que sa viscosité est inférieure à 1 Pa.s à température ambiante et à la pression atmosphérique.

Les proportions du mélange eau/solvant peuvent être comprises respectivement entre 0,5/99,5 à 60/40 % en volume, et de préférence entre 10/90 et 50/50 % en volume, et de manière plus préférée entre 20/80 et 40/60 % en volume, et plus précisément entre 20/80 et 35/65 % en volume, par rapport au volume total de la composition.

Les composés amphiphiles sont des composés chimiques (monomère ou polymère) ayant au moins un groupement chimique hydrophile ou polaire, présentant une forte affinité avec la phase aqueuse et au moins un groupement chimique présentant une forte affinité avec le solvant (communément désigné comme hydrophobe). Ils présentent la propriété de stabiliser le mélange eau/solvant non miscible à l'eau sous forme éventuellement d'une émulsion et de disperser les particules d'hydrates dans la phase non miscible à l'eau.

Les composés amphiphiles comportent une partie hydrophile qui peut être soit neutre, soit anionique, soit cationique, soit encore zwittérionique. La partie présentant une forte affinité avec le solvant (désignée comme hydrophobe) peut être soit hydrocarbonée, soit siliconée ou fluoro-siliconée, soit encore halogénée ou perhalogénée.

Les composés amphiphiles hydrocarbonés utilisés seuls, ou en mélanges, sont choisis parmi le groupe formé par les composés amphiphiles non ioniques, anioniques, cationiques ou zwittérioniques.

Les composés non ioniques sont caractérisés en ce qu'ils contiennent:
- une partie hydrophile comprenant soit des groupements oxyde d'alkylène, hydroxy ou encore des groupements amino alkylène,
- une partie hydrophobe comprenant une chaîne hydrocarbonée dérivée d'un alcool, d'un acide gras, d'un dérivé alkylé d'un phénol ou une polyoléfine, par exemple dérivée de l'isobutène ou du butène.

La liaison entre la partie hydrophile et la partie hydrophobe peut, par exemple être une fonction éther, ester ou amide. Cette liaison peut également être obtenue par un atome d'azote ou de soufre. Parmi les composés hydrocarbonés amphiphiles non ioniques, on peut mentionner les alcools gras oxyéthylés, les alkylphénol alkoxylés, les dérivés oxyéthylés et/ou oxypropylés, les éthers de sucre, les esters de polyol, tels que glycérol, polyéthylène glycol, sorbitol et sorbitan, les mono et diéthanol amides, les amides d'acides carboxyliques, les acides sulfoniques ou les acides aminés.

Les composés hydrocarbonés amphiphiles anioniques sont caractérisés en ce qu'ils contiennent un ou plusieurs groupements fonctionnels ionisables dans la phase aqueuse pour former des ions chargés négativement; ces groupements anioniques apportant l'activité de surface de la molécule. Un tel groupement fonctionnel est un groupement acide ionisé par un métal ou une amine. L'acide peut par exemple être un acide carboxylique, sulfonique, sulfurique, ou phosphorique. Parmi les composés hydrocarbonés amphiphiles anioniques, on peut mentionner:
- les carboxylates tels que les savons métalliques, les savons alkalins, ou les savons organiques (tels que les N-acyl aminoacides, N-acyl sarcosinates, N-acyl glutamates et N-acyl polypeptides),
- les sulfonates tels que les alkylbenzènesulfonate (c'est à dire les alkylbenzenesulfonate alkoxylés) les paraffines et oléfines sulfonates, les ligosulfonate ou les dérivés sulfonsucciniques (tels que les sulfosuccinates, hémisulfosuccinates, dialkylsulfosuccinates, par exemple le dioctyl-sulfosuccinate de sodium),
- les sulfates tels que les alkylsulfates, les alkyléthersulfates et les phosphates.

Les composés hydrocarbonés amphiphiles cationiques sont caractérisés en ce qu'ils contiennent un ou plusieurs groupements fonctionnels ionisables dans la phase aqueuse pour former des ions chargés positivement. Parmi les composés hydrocarbonés cationiques, on peut mentionner :
- les sels d'alkylamine choisis parmi le groupe constitué par les alkylamine éthers, les dérivés d'alkyle diméthyle benzyle ammonium et les dérivés d'alkyle amine alcoxylés,
- les dérivés hétérocycliques tels que les dérivés pyridinium, imidazolium, quinolinium, pipéridinium ou morpholinuim.

Les composés hydrocarbonés zwittérioniques se caractérisent en ce qu'ils possèdent au moins deux groupements ionisables, tels que l'un au moins est chargé positivement et l'un au moins est chargé négativement. Les groupements étant choisis parmi les groupements anioniques et cationiques décrits précédemment, tels que par exemple les bétaïnes, les dérivés alkyl amido bétaïnes, des sulfobétaïne, des phosphobétaïnes ou encore des carboxybétaïnes.

Les composés amphiphiles, comportant une partie hydrophile neutre, anionique, cationique, ou zwittérionique, peuvent également avoir une partie hydrophobe (définie comme présentant une forte affinité avec le solvant non miscible à l'eau) siliconée ou fluoro-siliconée. Ces composés amphiphiles siliconés, oligomères ou polymères, peuvent également être utilisés pour les mélanges eau/solvant organique ou eau/solvant halogéné ou perhalogéné ou encore eau/solvant siliconé.

Les composés amphiphiles siliconés neutres peuvent être des oligomères ou des copolymères de type PDMS dans lesquels les groupements méthyles sont partiellement remplacés par des groupements polyoxyde d'alkylène (de type polyoxyde d'éthylène, polyoxyde de propylène ou d'un polymère mélange polyoxyde d'éthylène et de propylène) ou pyrrolidone tels que les dérivés PDMS/hydroxy-alkylène oxypropyl-méthyle siloxane ou encore des dérivés alkyl méthyle siloxane/hydroxy-alkylène oxypropyl-méthyle siloxane.

Ces copolyols obtenus par réaction d'hydrosilylation possèdent des groupements hydroxyles finaux réactifs. Ils peuvent donc être utilisés pour réaliser des groupements ester, par exemple par réaction d'un acide gras, ou encore des groupements alkanolamides, ou encore des groupements glycosides.

Des polymères siliconés comportant des groupements alkyls latéraux (hydrophobes) directement liés à l'atome de silicium peuvent également être modifiés par réaction avec des molécules de type fluoro alcools (hydrophiles) pour former des composés amphiphiles.

Les propriétés tensioactives sont ajustées avec le rapport groupement hydrophile/groupement hydrophobe.

Les copolymères PDMS peuvent également être rendus amphiphiles par des groupements anioniques tels que des groupements phosphate, carboxylate, sulfate ou encore sulfosuccinate. Ces polymères sont généralement obtenus par réaction d'acides sur les fonctions hydroxydes finales de chaînes latérales de polyoxyde d'alkynlène de polysiloxane.

Les copolymères PDMS peuvent également être rendus amphiphiles par des groupements cationiques tels que des groupements ammonium quaternaire, des groupements alkylamido amine quaternisée, ou des groupements alkyle alcoxy amine quaternisée ou encore une imidazoline amine quaternisée. On peut utiliser, par exemple le copolymère PDMS/chlorure de benzyle tri-méthyl ammonium méthylsiloxane ou encore les dérivés halogéno N-Alkyl-N,Ndiméthyl-(3-siloxanylpropyl)ammonium.

Les copolymères PDMS peuvent également être rendus amphiphiles par des groupements de type bétaïne tel que une carboxybétaïne, une alkyl amido bétaïne, une phosphobétaïne ou encore une sulfobétaïne. Dans ce cas, les copolymères comprendront une chaîne siloxane hydrophobe et par exemple une partie organobétaïne hydrophile de formule générale :

(Me₃SiO)(SiMe₂O)ₐ(SiMeRO)SiMe₃

Avec R = (CH₂)₃⁺NMe₂(CH₂)_{b}COO⁻ ; a= 0,10 ; b= 1,2

Les composés amphiphiles, comportant une partie hydrophile neutre, anionique, cationique, ou zwittérionique, peuvent aussi avoir une partie hydrophobe (définie comme présentant une forte affinité avec le solvant non miscible à l'eau) halogénée ou perhalogénée. Ces composés amphiphiles halogénés, oligomères ou polymères, peuvent également être utilisés pour les mélanges eau/solvant organique ou eau/solvant halogéné ou perhalogéné ou encore eau/solvant siliconé.

Les composés amphiphiles halogénés tels que par exemple les composés fluorés peuvent être ioniques ou non ioniques. En particulier, on peut citer :
- les composés halogénés ou perhalogénés amphiphiles non ioniques tels que les composés répondant à la formule générale Rf(CH₂)(OC₂H₄)ₙOH, dans laquelle Rf est une chaîne perfluorocarbonée ou fluorocarbonée partiellement hydrogénée dans lesquels n est un nombre entier au moins égal à 1, les agents tensioactifs non ioniques fluorés de type polyoxyéthylène-fluoroalkyléther,
- les composés amphiphiles ionisables pour former de composés anioniques, tels que les acides perfluorocarboxyliques, et leurs sels, ou les acides perfluorosulphoniques et leurs sels, les composés perfluorophosphates, les acides mono et dicarboxyliques dérivant des perfluoro polyéthers, et leurs sels, les acides mono et disulfoniques dérivant des perfluoro polyéthers, et leurs sels, les composés amphiphiles perfluoro polyéther phosphates et les composés amphiphiles perfluoro polyéther diphosphates,
- les composés halogénés amphiphiles cationiques ou anioniques perfluorés ou ceux dérivants des perfluoro polyéthers ayant 1, 2 ou 3 chaînes hydrophobes latérales, les fluoroalcools éthoxylés, les sulfonamides fluorées ou les carboxamides fluorées.

Le composé amphiphile est ajouté audit mélange eau/solvant dans une proportion comprise entre 0,1 et 10% en poids, et de préférence entre 0,1 et 5% en poids, par rapport à la phase non miscible dans la phase aqueuse, c'est-à-dire le solvant.

Par "promoteur", on entend au sens de la présente invention tout composé chimique qui présente la propriété d'abaisser la pression de formation des hydrates et/ou de modifier la cinétique de formation des hydrates.

Le mélange de promoteurs selon l'invention comprend du tétrahydrofurane (THF) et au moins un promoteur de formule générale (I) : 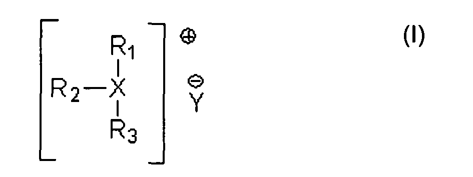
- avec X= S, N-R₄ ou P-R₄,
- Y est un anion choisi parmi le groupe constitué par un hydroxyle, un sulfate ou un halogène. L'halogène peut être choisi parmi le groupe constitué par le brome, le fluor, le chlore et l'iode,
- R₁, R₂, R₃, R₄ sont identiques ou différents et choisis parmi le groupe constitué des radicaux alkyles en C1-C5 linéaires ou ramifiés. Par alkyle linéaire ou ramifié ayant 1 à 5 atomes de carbone, on entend en particulier les radicaux méthyle, éthyle, propyle, isopropyle, butyle, isobutyle, sec-butyle, tert-butyle et pentyle.

Parmi les promoteurs de formule (I), les alkyles d'ammonium et les alkyles phosphonium sont les préférés.

De préférence, le promoteur de formule (I) est choisi parmi le groupe constitué par le bromure de tétraéthylammonium (TEAB), le bromure de tétrapropylammonium (TPAB), le sulfate hydrogène de tétrabutylammonium (TBAHS), l'hydrate de chlorure de tétrabutylammonium (TBACl), l'iodure de tétrabutylammonium (TBAl), l'hydroxide de tétrabutylammonium (TBAOH), l'hydrate de fluorure de tétrabutylammonium (TBAF), le bromure de tétrabutylammonium (TBAB), le bromure de tétrabutylphosphonium (TBPB).

En particulier, on peut choisir un sous-groupe de promoteurs répondant à la formule (II) suivante dans laquelle : 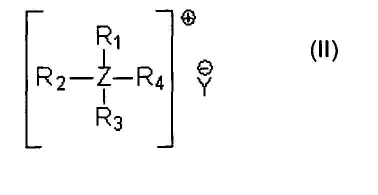
- Z= N ou P,
- Y est un anion choisi parmi le groupe constitué par un hydroxyle, un sulfate ou un halogène. L'halogène peut être choisi parmi le groupe constitué par le brome, le fluor, le chlore et l'iode,
- R₁= R₂= R₃=R₄=butyle.

De manière préférée, le promoteur de formule (II) peut être choisi parmi le groupe constitué par le bromure de tétrabutylammonium (TBAB), l'hydrate de fluorure de tétrabutylammonium (TBAF) et le bromure de tétrabutylphosphonium (TBPB).

Le promoteur tétrahydrofurane peut être ajouté à la composition dans une proportion comprise entre 1% et 15 % molaire par rapport à la phase aqueuse et de préférence entre 3% et 12% molaire par rapport à la phase aqueuse et de manière encore plus préférée entre 6% et 9% molaire par rapport à la phase aqueuse.

Le promoteur de formule (I) peut être ajouté à la composition dans une proportion comprise entre 1 et 20 % massique par rapport à la phase aqueuse, et de préférence entre 5 et 15 % massique par rapport à la phase aqueuse et de manière encore plus préférée entre 7 et 12% massique par rapport à la phase aqueuse.

Lorsque le promoteur est choisi parmi les composés de formule (II), il peut être ajouté à la composition dans une proportion comprise entre 1 et 20 % massique par rapport à la phase aqueuse, et de préférence entre 5 et 15 % massique par rapport à la phase aqueuse et de manière encore plus préférée entre 7 et 12% massique par rapport à la phase aqueuse.

Le procédé d'enrichissement en composés acides d'un effluent gazeux selon l'invention peut être appliqué à différents gaz de charge. Par exemple, le procédé permet de décarbonater des fumées de combustion, de désacidifier du gaz naturel ou un gaz obtenu en queue du procédé Claus. Le procédé permet également de retirer les composés acides contenus dans les gaz de synthèse, dans les gaz de conversion, dans les gaz de centrales intégrées de combustion du charbon ou du gaz naturel, dans les gaz issus de la fermentation de biomasse, dans les gaz de cimenterie et dans les fumées d'incinérateur. Par "composés acides", on entend au sens de la présente invention du CO₂ et/ou de l'H₂S.

### Exemple:

Les exemples suivants qui illustrent l'invention ne doivent pas être considérés comme limitatifs.

### Dispositif et conditions expérimentales :

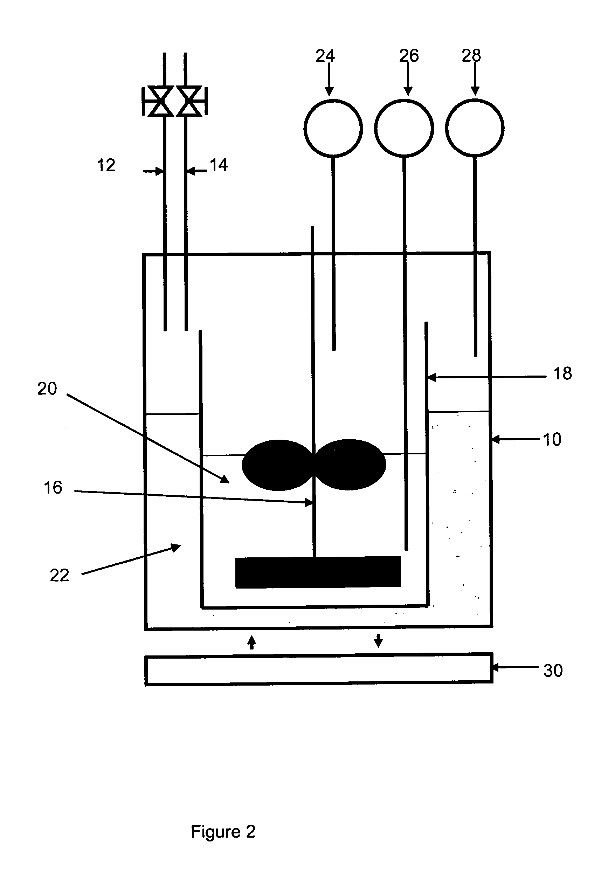

Pour tester l'efficacité de la composition utilisée dans le procédé selon l'invention, on simule, dans le dispositif en référence à la figure 2, la phase de formation des hydrates pour un mélange de gaz contenant 85 % molaire d'azote et 15% molaire de CO2. La phase de formation des hydrates est étudiée dans un réacteur fermé et thermostaté dans lequel on mesure les variations de pression de la phase gaz et les variations de températures des phases gaz et liquide. Ces variations sont liées à la formation des hydrates.

En référence à la figure 2, le dispositif comporte un réacteur 10 d'une contenance de trois litres. Il est pourvu d'une entrée 12 et d'une sortie 14 de gaz, d'un dispositif d'agitation 16 et de capteurs de température et de pression 26, 28, 24.

On remplit le réacteur avec un mélange 22 composé de 270 ml d'eau milli-Q et de 2 ml d'éthylène glycol. Une cuve en verre 18 contenant 700 ml de la composition à tester 20 est placée dans le mélange d'éthylène glycol/eau qui assure l'échange thermique entre le réacteur 10 et la cuve 18. La température du bain d'éthylène glycol/eau est pilotée par un cryostat 30. Après la fermeture du réacteur, on amène le réacteur et la cuve à un équilibre thermique à 20°C après avoir effectué deux purges successives à 10 bars (10 bars = 1 MPa) avec le mélange gazeux décrit ci-dessus.

Le réacteur est ensuite alimenté avec le mélange de gaz décrit ci-dessus à la pression initiale de travail (5, 15 et 20 bars selon les expériences) et jusqu'à ce que la température de consigne de 20°C soit atteinte; l'alimentation en gaz du réacteur est alors stoppée. A ce stade, le dispositif expérimental est fixé et aucun ajout de matière n'est réalisé ultérieurement au cours de l'expérience.

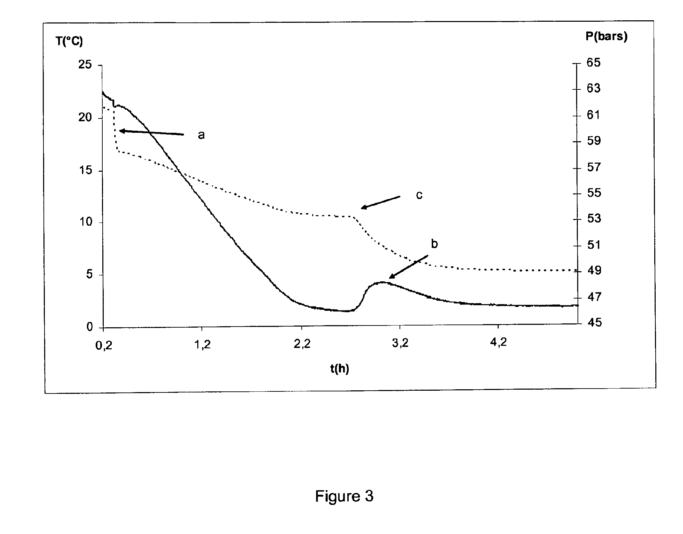

A un temps t déterminé, la composition à tester est agitée à 250 tours/minutes et le reste pendant toute la durée de l'expérience. La température reste stable à 20°C pendant 3 heures, puis diminue de 0,4 °C/min jusqu'à -3°C où elle reste stable pendant 4 heures. On mesure à l'aide de capteurs 42, 38 et 40 respectivement les variations de température de la composition à tester et les variation de température et de pression du ciel gazeux. On représente graphiquement la variation de température (courbe en pointillés) et de pression (courbe en trait plein) du ciel gazeux en fonction du temps. Un exemple de ces représentations est illustré à la figure 3. Le contact entre le gaz et la composition liquide à tester entraîne une chute de la pression qui est due au transfert d'une partie du gaz vers la composition à tester (a). Ce transfert est rapide, et un nouvel état stable au niveau de la pression est obtenu en quelques minutes. On observe ensuite un pic exothermique (b) et une chute de la pression (c); ces événements correspondent à la formation d'hydrates de gaz dans la composition à tester. En modélisant la courbe de la pression en fonction du temps, on détermine la constant de temps (K) de la réaction de formations des hydrates.

Aucun ajout de matière n'est possible, le dispositif expérimental est donc fixé et le seul paramètre qui peut influencer la formation des hydrates est la température interne du réacteur. La descente en température est contrôlée par un profil de température imposé au bain thermostaté et utilisé comme standard pour toutes les expériences. A noter que les températures au sein du réacteur évoluent beaucoup plus lentement que celle du mélange eau/éthylène glycol thermostaté du fait de l'inertie thermique de l'installation, des fluides que le réacteur contient et des phénomènes exo- et endothermiques qui sont crées, ce qui explique que les plateaux chauds et froids soient assez longs. A la fin de l'expérience, on analyse la composition finale du mélange gazeux par chromatographie.

### Composition de base:

Les compositions à tester sont formées à partir d'une composition de base à laquelle on ajoute un ou plusieurs promoteurs.

La composition de base est composée de 1/3 de volume d'eau et 2/3 de volume de solvant auquel on ajoute un composé amphiphile obtenu par réaction entre un anhydride polyisobutényl succinique et du polyéthylène glycol. Le composé amphiphile est ajouté à une concentration de 0,17% poids par rapport au volume de solvant. La composition pondérale du solvant est :
- pour les molécules ayant moins de 11 atomes de carbone : 20% de paraffines et d'isoparaffines, 48% de naphtènes, 10% d'aromatiques;
- pour les molécules ayant au moins 11 atomes de carbone : 22% d'un mélange de paraffines, d'isoparaffines, de naphtènes et d'aromatiques.

### Exemple n°1 (non conforme à l'invention) :

On ajoute à la composition de base décrite ci-dessus 9 % molaire de tétrahydrofurane (THF) par rapport à la phase aqueuse. Cette composition est testée dans les conditions expérimentales décrites précédemment pour trois valeurs de pressions initiales différentes : 5, 15 et 20 bars.

On observe la formation d'hydrates de gaz par une chute de la pression et par l'apparition d'un pic exothermique lorsque la température du cryostat est en train de diminuée.

La cinétique de consommation de gaz donc de formation des hydrates de gaz peut être modélisée par un modèle d'une réaction de premier ordre. Avec cette composition et à une pression de 20 bars, la constante de temps de la réaction de formation des hydrates (K) est égale à 2 heures. A la pression de 15 bars, la constante de temps de la réaction de formation des hydrates (K) est égale à 3 heures et à 5 bars, elle est égale à 4 heures.

La composition finale du mélange gazeux est de 9% de CO2 et de 91% de N2.

### Exemple n°2 (non conforme à l'invention) :

On ajoute à la composition de base 9 % massique de TBAB par rapport à la phase aqueuse et cette composition est testée dans les conditions expérimentales décrites précédemment pour trois valeurs de pressions initiales différentes : 5, 15 et 20 bars.

On n'observe ni pic exothermique ni diminution de la pression.

Aucun hydrate ne se forme dans ces conditions expérimentales et dans cette composition testée.

La composition finale du mélange gazeux est identique à la composition du mélange gazeux qui a été injectée dans le réacteur : 85 % de N2 et 15% de CO2.

### Exemple n°3 (conforme à l'invention) :

On ajoute à la composition de base un mélange de promoteurs comprenant 9 % molaire de THF par rapport à la phase aqueuse et 9 % massique de TBAB par rapport à la phase aqueuse. Cette composition est testée dans les conditions expérimentales décrites précédemment pour trois valeurs de pressions initiales différentes : 5, 15 et 20 bars.

On observe la formation d'hydrates de gaz par l'apparition d'un pic exothermique et d'une diminution de la pression.

La cinétique de consommation de gaz donc de formation des hydrates de gaz peut être modélisée par un modèle d'une réaction de premier ordre. Avec cette composition et à une pression de 20 bars, la constante de temps de la réaction de formation des hydrates (K) est égale à 1 heure. A la pression de 15 bars, la constante de temps de la réaction de formation des hydrates (K) est égale à 1,84 heures et à 5 bars elle est égale à 2 heures.

La composition finale du mélange gazeux est de 5% de CO2 et de 95% de N2.

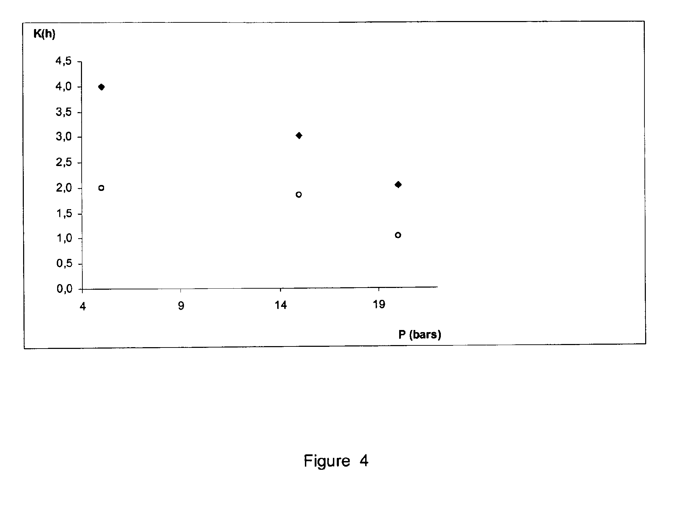

Les résultats de ces 3 exemples sont résumés sur la figure 4 qui représente les constantes de temps (K) en heures (ordonnées) de la réaction de formation des hydrates en fonction de la pression initiales (en bars, abscisses) pour une composition comprenant du THF (losange plein), pour une composition comprenant du TBAB (triangle noir) et pour une composition comprenant un mélange de deux promoteurs: le THF et TBAB (rond vide). Sur cette figure, on constate que pour une pression initiale de 5 et 15 bars, la constante de temps de la composition comprenant le mélange de deux promoteurs (TBAB et THF) est deux fois plus basse que celle d'une composition ne comprenant que le THF. Les hydrates de gaz se forment donc plus rapidement dans la composition comprenant le mélange de deux promoteurs (TBAB et THF) que dans celle qui ne comprend que le THF comme promoteur.

De plus, on observe qu'il n'y a aucune formation d'hydrates de gaz dans une composition ne comprenant qu'un seul promoteur (triangle noir pour une composition comprenant du TBAB) pour une pression de 5, 15 ou de 20 bars. Ces pressions ne sont pas assez élevées pour permettre la formation d'hydrates avec ce seul promoteur. Il aurait fallu se placer à des pressions d'au moins 40 bars. Or lorsqu'on utilise une composition comprenant un mélange de promoteurs (TBAB et THF, rond vide), on observe la formation d'hydrates dès 5 bars.

En conclusion, la composition conforme à l'invention (exemple 3) permet :
- de capter une quantité de composés acides plus importante qu'une composition avec un seul promoteur (exemple 1 et 2).
- d'augmenter de façon significative la cinétique de la réaction de formation des hydrates par rapport à une composition avec un seul promoteur.
- de diminuer la pression nécessaire à la formation des hydrates.

Ces exemples démontrent l'effet de synergie des deux promoteurs sur la cinétique de formation des hydrates.

Les réalisations de l'invention au sujet desquelles un droit exclusif de propriété ou de privilège est revendiqué, sont définis comme il suit :

## Revendications

1. Procédé d'enrichissement en composés acides d'un effluent gazeux, **caractérisé en ce qu'**il comporte les étapes suivantes:
• on introduit dans un contacteur un gaz de charge comprenant des composés acides et une composition comprenant :
- au moins un mélange de deux phases liquides non miscibles entre elles, dont une phase aqueuse,
- au moins un composé amphiphile,
- au moins un mélange de promoteurs comprenant du tétrahydrofurane et au moins un promoteur de formule (I) 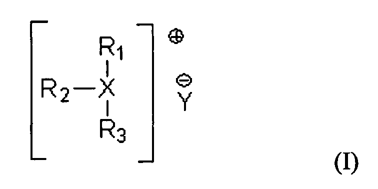
o avec X= S, N-R₄ ou P-R₄,
○ Y est un anion choisi parmi le groupe constitué par un hydroxyle, un sulfate ou un halogène,
○ R₁, R₂, R₃, R₄ sont identiques ou différents et choisis parmi le groupe constitué des radicaux alkyles en C1-C5 linéaires ou ramifiés,
• on établit dans ledit contacteur des conditions de pression et de température déterminées pour la formation d'hydrates composés d'eau, de promoteurs et desdits composés acides,
• on transporte lesdits hydrates en dispersion dans la phase non miscible dans la phase aqueuse de ladite composition par pompage vers un ballon de dissociation des hydrates,
• on établit dans ledit ballon les conditions de dissociation des hydrates,
• on évacue le gaz issu de la dissociation, ledit gaz étant enrichi en composés acides par rapport au gaz de charge.

2. Procédé selon la revendication 1, dans lequel le mélange de promoteur promoteurs comprenant du tétrahydrofurane et au moins un promoteur de formule (II) 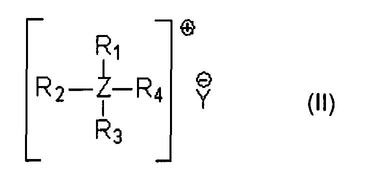
- Z= N ou P,
- Y est un anion choisi parmi le groupe constitué par un hydroxyle, un sulfate ou un halogène,
- R₁= R₂= R₃=R₄=butyle.

3. Procédé selon la revendication 1, dans lequel le promoteur de formule (I) est choisi parmi le groupe formé par : le promoteur de formule (I) est choisi parmi le groupe constitué par le bromure de tétraéthylammonium (TEAB), le bromure de tétrapropylammonium (TPAB), le sulfate hydrogène de tétrabutylammonium (TBAHS), l'hydrate de chlorure de tétrabutylammonium (TBACl), l'iodure de tétrabutylammonium (TBAl), l'hydroxide de tétrabutylammonium (TBAOH), l'hydrate de fluorure de tétrabutylammonium (TBAF), le bromure de tétrabutylammonium (TBAB), le bromure de tétrabutylphosphonium (TBPB).

4. Procédé selon la revendication 2, dans lequel le promoteur est de formule (II) est choisi parmi le groupe constitué par le par le bromure de tétrabutylammonium (TBAB), l'hydrate de fluorure de tétrabutylammonium (TBAF) et le bromure de tétrabutylphosphonium (TBPB).

5. Procédé selon l'une des revendications précédentes, dans lequel les proportions du mélange eau/solvant sont comprises respectivement entre 0,5/99,5 et 60/40% en volume, et de préférence entre 10/90 et 50/50%, et plus précisément entre 20/80 et 40/60%.

6. Procédé selon l'une des revendications précédentes, dans lequel les proportions du composé amphiphile sont comprises entre 0,1 et 10% en poids, et de préférence entre 0,1 et 5% en poids, par rapport à la phase non miscible dans la phase aqueuse.

7. Procédé selon l'une des revendications précédentes, dans lequel les proportions du tétrahydrofurane sont comprises entre 1% et 15 % molaire par rapport à la phase aqueuse.

8. Procédé selon l'une des revendications précédentes, dans lequel les proportions du promoteur de formule (I) sont comprises entre 1 et 20 % massique par rapport à la phase aqueuse.

9. Procédé selon l'une des revendications précédentes, dans lequel la phase non miscible dans la phase aqueuse est choisie parmi le groupe constitué par les solvants hydrocarbonés, les solvants de type silicone, les solvants halogénés ou perhalogénés, et leurs mélanges.

10. Procédé selon la revendication 9, dans lequel les solvants hydrocarbonés sont choisis parmi le groupe constitué par:
- des coupes aliphatiques, et notamment des coupes isoparaffiniques,
- des solvants organiques de type coupes aromatiques ou coupes naphténiques,
- des alcanes ramifiés, les cycloalcanes et alkylcycloalcanes, les composés aromatiques, alkylaromatiques,
et dans lequel le solvant hydrocarboné a un point éclair supérieur à 40°C, de préférence supérieur à 75°C, et plus précisément supérieur à 100°C, et un point de cristallisation inférieur à -5°C.

11. Procédé selon la revendication 9, dans lequel les solvants de type silicone, seuls ou en mélanges, sont choisis parmi le groupe constitué par :
- les polydiméthylsiloxane (PDMS) linéaires du type (CH₃)₃-SiO-[(CH₃)₂-SiO]ₙ-Si(CH₃)₃ avec n compris entre 1 et 900, correspondant à des viscosités à température ambiante comprises entre 0,1 et 10000 mPa.s,
- les polydiéthylsiloxanes dans la même gamme de viscosité,
- les polydiméthylsiloxanes cycliques D₄ à D₁₀ et préférentiellement de D₅ à D₈, le motif D représente l'unité monomère diméthylsiloxane,
- les poly(trifluoropropyl méthyl siloxane).

12. Procédé selon la revendication 9, dans lequel les solvants halogénés ou perhalogénés sont choisis parmi le groupe constitué par les perfluorocarbures (PFC), les hydrofluoroéthers (HFE), les perfluoropolyéthers (PFPE), et dans lequel le solvant halogéné ou perhalogéné a un point d'ébullition supérieur ou égal à 70°C à pression atmosphérique et une viscosité inférieure à 1 Pa.s, à température ambiante et à la pression atmosphérique.

13. Procédé selon la revendication 1 à 12, dans lequel le composé amphiphile comporte une partie hydrophile et une partie présentant une forte affinité avec la phase non miscible à la phase aqueuse.

14. Procédé selon l'une des revendications 1 à 13, dans lequel ledit composé amphiphile non ionique comporte :
- une partie hydrophile comprenant des groupements oxyde d'alkylène, hydroxy ou des groupements amino alkylène,
- une partie hydrophobe comprenant une chaîne hydrocarbonée dérivée d'un alcool, d'un acide gras, d'un dérivé alkylé d'un phénol ou une polyoléfine, et de préférence dérivée de l'isobutène ou du butène.

15. Procédé selon la revendication 14, dans lequel ledit composé amphiphile non ionique est choisi dans le groupe suivant: les alcools gras oxyéthylés, les alkylphénol alkoxylés, les dérivés oxyéthylés et/ou oxypropylés, les éthers de sucre, les esters de polyol, tels que glycérol, polyéthylène glycol, sorbitol et sorbitan, les mono et diéthanol amides, les amide d'acides carboxyliques, les acides sulfoniques ou les acides aminés.

16. Procédé selon l'une des revendications 1 à 13, dans lequel ledit composé amphiphile anionique est choisi parmi le groupe suivant:
- les carboxylates, tels que les savons métalliques, les savons alkalins, ou les savons organiques, tels que les N-acyl aminoacides, N-acyl sarcosinates, N-acyl glutamates et N-acyl polypeptides,
- les sulfonates, tels que les alkylbenzènesulfonate, les paraffines et oléfines sulfonates, les ligosulfonate ou les dérivés sulfonsucciniques, tels que les sulfosuccinates, hémisulfosuccinates, dialkylsulfosuccinates, par exemple le dioctylsulfosuccinate de sodium,
- les sulfates, tels que les alkylsulfates, les alkyléthersulfates et les phosphates.

17. Procédé selon l'une des revendications 1 à 13, dans lequel ledit composé amphiphile cationiques est choisi parmi le groupe suivant:
- les sels d'alkylamine choisis parmi le groupe constitué par les alkylamine éthers, les dérivés d'alkyle diméthyle benzyle ammonium, les dérivés d'alkyle amine alcoxylés,
- les dérivés hétérocycliques, tels que les dérivés pyridinium, imidazolium, quinolinium, pipéridinium ou morpholinuim.

18. Procédé selon l'une des revendications 1 à 13, dans lequel ledit composé amphiphile zwittérionique est choisi parmi le groupe suivant: les bétaïnes, les dérivés alkyl amido bétaïnes, des sulfobétaïne, des phosphobétaïnes, les carboxybétaïnes.

19. Procédé selon l'une des revendications 1 à 13, dans lequel ledit composé amphiphile comporte une partie siliconée ou fluoro-siliconée.

20. Procédé selon l'une des revendications 1 à 13, dans lequel ledit composé amphiphile comporte une partie halogénée ou perhalogénée.

21. Procédé selon l'une des revendications précédentes, dans lequel on augmente la pression de la dispersion d'hydrates dans un facteur compris entre 2 et 200 fois la pression du gaz de charge.

22. Composition comprenant :
• au moins un mélange de deux phases liquides non miscibles entre elles, dont une phase aqueuse,
• au moins un composé amphiphile,
• au moins un mélange de promoteurs comprenant du tétrahydrofurane et au moins un promoteur de formule (I) 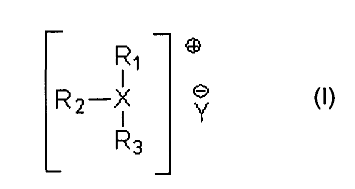
- avec X= S, N-R₄ ou P-R₄,
- Y est un anion choisi parmi le groupe constitué par un hydroxyle, un sulfate ou un halogène,
- R₁, R₂, R₃, R₄ sont identiques ou différents et choisis parmi le groupe constitué des radicaux alkyles en C1-C5 linéaires ou ramifiés.

23. Utilisation de la composition selon la revendication 22 pour la formation et/ou le transport d'hydrates de gaz.
